# DEMANDE DE BREVET EUROPEEN

(11) **EP 4 529 171 A2**
(43) Date de publication de la demande: **26.03.2025**
(21) Numéro de dépôt: 25156393.8
(22) Date de dépôt: 27.02.2020
(51) Int. Cl.: H04N 19/597

(54) **PROCÉDÉS ET DISPOSITIFS DE CODAGE ET DE DÉCODAGE D'UNE SÉQUENCE VIDÉO MULTI-VUES**

(30) Priorité: 15.03.2019 FR 1902659
(62) Demande divisionnaire de: 20719686.6
(71) Demandeur: Orange, 92130 Issy-les-Moulineaux (FR)
(72) Inventeur: JUNG, Joël, 92326 CHÂTILLON (FR); BOISSONADE, Patrick, 92326 CHÂTILLON (FR)
(74) Mandataire: Vidon Brevets & Stratégie

(57) **Abrégé**

L'invention concerne un procédé de décodage d'au moins un flux de données représentatif d'une vidéo multi-vues, comprenant au moins des données codées représentatives d'au moins une sous-image, comprenant des données de texture et des données de profondeur associées auxdites données de texture, ladite sous-image comprenant au moins une zone, dite utile, destinée à être utilisée pour générer au moins une image d'au moins une vue. Un indicateur est décodé, indiquant si la sous-image est codée selon une première méthode ou selon une deuxième méthode. Lorsque l'indicateur indique que la sous-image est codée selon la première méthode, une carte binaire est décodée indiquant pour au moins un pixel de la sous-image si ledit pixel appartient à la zone utile ou non. Lorsque l'indicateur indique que la sous-image est codée selon la deuxième méthode, une information représentative d'une valeur de profondeur d'affectation des données de profondeur de la sous-image est décodée, les données de profondeur de la sous-image sont décodées à partir de ladite valeur de profondeur d'affectation, et une carte indiquant, pour au moins un pixel de la sous-image, si le pixel appartient ou non à la zone utile, est construite, à partir des données de profondeur décodées et de l'information représentative de la valeur de profondeur d'affectation décodée.

## Description

### 1. Domaine de l'invention

L'invention concerne les vidéos dites immersives, représentatives d'une scène capturée par une ou plusieurs caméras. Plus particulièrement, l'invention concerne le codage et le décodage de telles vidéos.

### 2. Art Antérieur

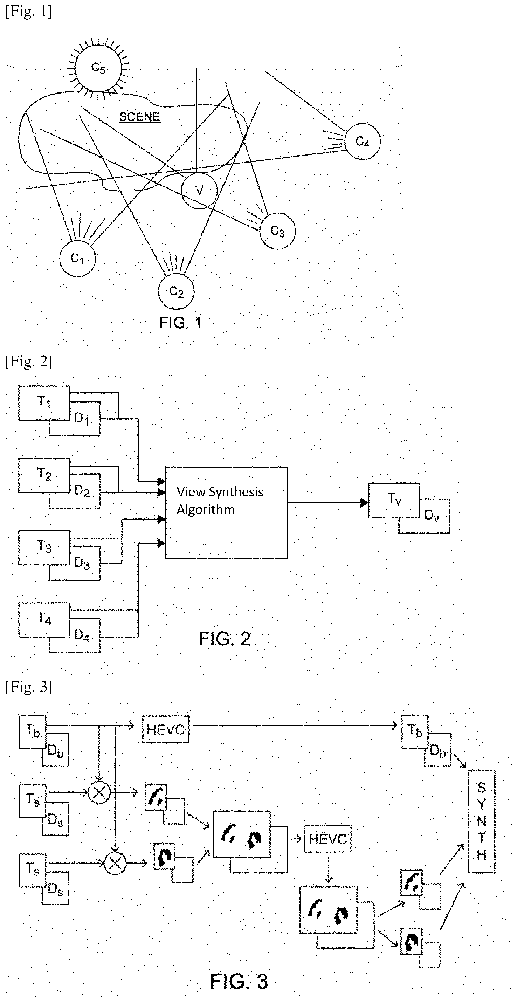

Dans un contexte de vidéo immersive, c'est à dire où le spectateur a la sensation d'être immergé dans la scène, la scène est classiquement capturée par un ensemble de cameras, telle qu'illustrée en figure 1. Ces caméras peuvent être de type 2D (caméras C1, C2, C3, C4 de la figure 1), ou de type 360, c'est à dire capturant toute la scène à 360 degrés autour de la caméra (caméra C5 de la figure 1).

L'ensemble de ces vues capturées sont traditionnellement codées, puis décodées par un terminal du spectateur. Néanmoins, afin de fournir une qualité d'expérience suffisante, et donc une qualité visuelle et une bonne immersion dans la scène affichée au spectateur, afficher seulement les vues capturées est insuffisant.

Afin d'améliorer la sensation d'immersion dans la scène, en général, une ou plusieurs vues, dites vues intermédiaires, sont calculées à partir des vues décodées.

Le calcul de ces vues intermédiaires peut être réalisé par un algorithme dit « de synthèse » de vue (view synthesis algorithm en anglais). Un exemple d'un algorithme de synthèse est illustré en figure 2 montrant principalement les entrées/sorties d'un algorithme de synthèse de vues. Selon cet exemple, à partir de n vues (ici 1-4), l'algorithme de synthèse est capable de synthétiser un point de vue "*v*" situé dans un volume donné, dit volume de visualisation, dépendant du positionnement des caméras. Les n vues et la vue synthétisée sont composées à la fois de données de texture (T₁-T₄, Tᵥ) et de données de profondeur (D₁-D₄, Dᵥ) qui permettent de représenter la distance des éléments de la scène par rapport aux caméras. Les données de profondeur sont classiquement représentées sous la forme d'une carte de profondeur, i.e. une image indiquant en chaque point de l'image la profondeur associée à l'objet représenté en ce point.

Ces cartes de profondeurs sont soit capturées par des caméras spécifiques, soit calculées à partir des vues de texture. La compression des vues capturées pour représenter la scène est un challenge, du fait de l'énorme quantité de données considérée.

De plus, comme les vues capturées sont nécessaires à la synthèse de vues intermédiaires, il est nécessaire d'avoir un compromis entre l'efficacité de codage des vues et la qualité de la synthèse de vues intermédiaires.

Les codeurs MV-HEVC et 3D-HEVC sont deux extensions du codeur 2D HEVC *("*High Efficiency Video Coding, Coding Tools and Spécification", Matthias Wien, Signals and Communication Technology, 2015*)* adaptées pour coder des vidéos multi-vues.

De tels codeurs prennent en entrée un ensemble de vues et optionnellement les cartes de profondeurs associées. Le codeur MV-HEVC n'applique aucun outil spécifique de codage au niveau bloc. Pour le codage d'une image d'une vue courante, il se contente d'utiliser en plus des images précédemment codées/décodées de la vue courante, une image d'une autre vue comme image de référence.

Le codeur 3D-HEVC quant à lui ajoute des outils spécifiques au codage des cartes de profondeur, et utilise des redondances inter-vues plus évoluées, et des redondances inter-composantes, où le codage de la carte de profondeur tire profit du codage de la texture. Toutefois, il apparaît que pour des contenus multi-vues 360°, la redondance entre les vues n'est pas correctement exploitée par ces deux codées. Leur efficacité de codage est donc loin d'être optimale. De plus, rien n'est fait pour préserver les zones qui entrainent potentiellement des occlusions, ce qui nuit à la qualité des images de vues synthétisées.

La figure 3 illustre une autre méthode permettant de coder des vidéos multi-vues et permettant de synthétiser des vues intermédiaires côté décodeur.

Selon cette méthode, une ou plusieurs vues de base (T_{b}, D_{b} sur la figure 3) sont codées avec un codeur 2D, par exemple un codeur de type HEVC, ou avec un codeur multi-vues.

Les autres vues (Tₛ, Dₛ) subissent un traitement qui permet d'extraire certaines zones de chacune de ces vues.

Dans le cas où l'ensemble des vues capturées n'est pas transmis au décodeur, ou lorsque les caméras sont naturellement distantes, les zones d'occlusions augmentent. Ces zones correspondent à des objets qui sont masqués dans les vues transmises au décodeur mais qui sont nécessaires pour reconstruire une image de n'importe quel point de vue dans le volume de visualisation. Les zones extraites peuvent ainsi correspondre aux zones d'occlusion qui sont masquées dans les vues de base mais qui sont visibles dans les vues non transmises au décodeur.

Un sous-échantillonnage des vues peut aussi entrainer des défauts importants dans la synthèse de vue, notamment lorsqu'un objet est très déformé suivant la position de visualisation, i.e. le point de vue synthétisé.

Selon la méthode illustrée en figure 3, les zones extraites, aussi appelées patchs par la suite, sont codées par exemple par un codeur vidéo classique 2D. Côté décodeur, l'algorithme de synthèse peut alors produire une ou des vues intermédiaires à partir des vues de base et des patchs décodés.

Globalement, les patchs permettent de transmettre au décodeur des informations relatives à une même zone qui peut être vue depuis un point de vue d'une vue de base ou depuis un autre point de vue, de sorte à pouvoir prendre en compte un changement d'illumination entre les deux points de vue, ou par exemple une mauvaise qualité de projection, liée à l'objet lui-même, par exemple dans le cas d'un objet incliné (qui s'étend sur un certain intervalle de profondeur).

Afin de coder les patchs représentant les zones extraites, il est nécessaire de coder la texture de ces patchs et la profondeur associée. Pour simplifier le codage et la représentation de ces patchs qui peuvent avoir différentes formes, en général, les patchs sont mémorisés sous la forme d'images rectangulaires ou au moins sous la forme de quadrilatères, aussi appelés sous-images.

Avec une représentation sous la forme de sous-images, il apparaît que les sous-images comprennent des données dites utiles correspondant aux zones extraites et susceptibles d'être utilisées pour la synthèse de vues intermédiaires, et des données non utiles n'appartenant pas initialement aux patchs extraits.

Pour un codage efficace des patchs, il est nécessaire que le codage des données non utiles ait un impact minimal sur le codage des données utiles.

De plus, côté décodeur, il est nécessaire de transmettre à l'algorithme de synthèse une information lui permettant d'identifier quelles sont les zones utiles ou les zones non utiles, afin que celui-ci n'utilise pas des zones inutiles lors de la synthèse.

Il existe donc un besoin d'améliorer l'état de la technique.

### 3. Exposé de l'invention

L'invention vient améliorer l'état de la technique. Elle concerne à cet effet, un procédé de décodage d'au moins un flux de données représentatif d'une vidéo multi-vues. Le flux de données comprend au moins des données codées représentatives d'au moins une sous-image, les données codées comprenant des données de texture et des données de profondeur associées auxdites données de texture, et la sous-image comprenant au moins une zone, dite utile, destinée à être utilisée pour générer au moins une image d'au moins une vue.

Un tel procédé de décodage comprend:
- le décodage à partir dudit au moins un flux de données, d'un indicateur indiquant si la sous-image est codée selon une première méthode ou selon une deuxième méthode,
- lorsque l'indicateur indique que la sous-image est codée selon la première méthode, le décodage pour la sous-image d'une carte binaire indiquant pour au moins un pixel de la sous-image si ledit pixel appartient à la zone utile ou non,
- le décodage des données de texture et des données de profondeur de la sous-image, lorsque l'indicateur indique que la sous-image est codée selon la deuxième méthode, les données de profondeur de ladite sous-image pour les pixels situés en dehors de la zone utile comprenant une valeur de profondeur décodée.

Selon l'invention, il est ainsi possible de coder et décoder des sous-images codant des zones utiles à la synthèse en limitant le coût de codage de ces sous-images. Notamment, selon la valeur d'un indicateur codé dans le flux, la zone utile dans une sous-image représentant un patch, peut-être déterminée par un algorithme de synthèse lors de la reconstruction d'une vue, soit à partir des informations de profondeur codées dans le flux pour la sous-image, soit à partir d'une carte binaire codée et décodée à partir du flux.

Selon l'invention, contrairement aux techniques de l'art antérieur, il n'est ainsi pas nécessaire de coder systématiquement pour la sous-image une carte binaire de validité permettant d'identifier la zone utile de la sous-image. Par exemple, au codeur, une mise en compétition peut être mise en oeuvre pour déterminer le meilleur codage en terme de débit/distorsion pour les informations de profondeur du patch. Une telle mise en compétition compare les performances d'une première méthode codant une carte binaire indiquant quels pixels appartiennent à la zone utile et transmise à l'algorithme de synthèse lors de la synthèse d'une vue, avec les performances d'une deuxième méthode selon laquelle la valeur de profondeur des pixels situés en dehors de la zone utile est affectée d'une valeur particulière. Lorsque la sous-image est codée selon la première méthode, seules les valeurs de profondeur des pixels appartenant à la zone utile sont codées et décodées. Alors que lorsque la sous-image est codée selon la deuxième méthode, la valeur de profondeur de tous les pixels de la sous-image est codée et décodée, sans distinction si ces pixels appartiennent ou non à la zone utile. Les pixels de la sous-image n'appartenant pas à la zone utile portent une valeur de profondeur décodée particulière qui a été déterminée au codage.

Une telle valeur particulière permet à l'algorithme de synthèse de ne pas utiliser les pixels qui n'appartiennent pas à la zone utile lors de la synthèse d'une vue.

La sous-image peut comprendre des données de texture et de profondeur relatives à une zone d'occlusion non visible dans les vues codées dans le flux de données. Ainsi, le codage d'une telle sous-image permet d'améliorer la qualité de la synthèse d'une vue non codée dans le flux de données.

Dans d'autres variantes de réalisation, la sous-image peut comprendre des données de texture et de profondeur relatives à une zone visible depuis des vues codées dans le flux de données, mais entraînant des défauts importants dans la synthèse d'une vue. Le codage d'une telle sous-image permet d'améliorer la qualité de la synthèse de cette vue en apportant des raffinements de texture et de profondeur à la zone.

L'invention proposée permet une meilleure adaptation au contenu des vues et aux types d'occlusion. Notamment, la première méthode permet de préserver des contours nets des zones d'occlusions lors de la synthèse, tandis que la deuxième méthode permet de gagner en coût de codage en évitant la transmission de la carte binaire. Toutefois, la distinction zone utile/zone non utile dans la sous-image n'étant plus faite lors du codage selon la deuxième méthode, la netteté des contours des zones d'occlusions n'est pas préservée.

Le choix au codeur entre la première méthode et la deuxième méthode peut être réalisé par exemple via une optimisation débit/distorsion dans laquelle la distorsion est mesurée au codeur à partir d'une synthèse partielle de la zone reconstruite par la zone utile.

L'invention concerne également un procédé de codage d'un flux de données représentatif d'une vidéo multi-vues, comprenant:
- le codage d'au moins une sous-image comprenant des données de texture et des données de profondeur associées auxdites données de texture, ladite sous-image comprenant une zone, dite utile, destinée à être utilisée pour générer au moins une image d'au moins une vue ,
le codage de ladite au moins une sous-image comprend:
- la détermination d'une méthode de codage pour coder la sous-image parmi une première méthode et une deuxième méthode,
- le codage d'un indicateur indiquant si la sous-image est codée selon la première méthode ou selon la deuxième méthode,
- lorsque l'indicateur indique que la sous-image est codée selon la première méthode, le codage pour la sous-image d'une carte binaire indiquant pour au moins un pixel de la sous-image si ledit pixel appartient à la zone utile ou non,
- lorsque l'indicateur indique que la sous-image est codée selon la deuxième méthode:
   - la détermination d'une valeur de profondeur d'affectation,
   - l'affectation de la valeur de profondeur d'affectation aux données de profondeur de la dite sous-image pour les pixels de la sous-image situés en dehors de la zone utile,
- le codage des données de texture et des données de profondeur de la sous-image.

Selon un mode particulier de réalisation de l'invention, la valeur de profondeur d'affectation est déterminée à partir d'une valeur de profondeur minimale déterminée sur au moins la zone utile de la sous-image, diminuée d'une valeur prédéterminée.

Par valeur de profondeur minimale, on entend par exemple la valeur de profondeur du point de la zone utile le plus éloigné (en termes de profondeur) dans la sous-image. La valeur de profondeur minimale est diminuée d'une valeur prédéterminée de sorte à obtenir une valeur de profondeur particulière qui soit distincte des valeurs de profondeur des points de la zone utile. La diminution par une valeur prédéterminée permet ainsi de prendre en compte les erreurs de quantification lors du codage des données de profondeur.

De plus, l'utilisation d'une valeur de profondeur particulière qui reste proche des valeurs de profondeur des points de la zone utile permet de limiter l'impact du coût de codage de la profondeur pour la sous-image. En effet, l'apparition de discontinuités fortes dans les informations de profondeur à coder pour la sous-image est limitée.

De plus, une telle valeur de profondeur d'affectation peut être utilisée par l'algorithme de synthèse de manière avantageuse. En effet, en cas de conflit lors de la synthèse d'une image, un algorithme de synthèse va naturellement favoriser les objets situés au premier plan, donc avec une valeur de profondeur plus grande, que les objets situés en arrière-plan. L'utilisation, pour les pixels de la sous-image localisés dans la zone non utile, d'une valeur de profondeur plus faible que la valeur de profondeur des pixels de la zone utile permet ainsi d'indiquer à l'algorithme de synthèse que les pixels portant la valeur de profondeur plus faible n'appartiennent pas à la zone utile, et leur prise en compte par l'algorithme de synthèse ne sera pas favorisée en cas de conflits lors de la reconstruction d'une image synthétisée.

Selon un autre mode particulier de réalisation de l'invention, lorsque l'indicateur indique que la sous-image est codée selon la deuxième méthode, le procédé de décodage, respectivement le procédé de codage, comprend le décodage, respectivement le codage, d'une information représentative de la valeur de profondeur d'affectation, la valeur de profondeur d'affectation correspondant à la valeur de profondeur décodée, respectivement codée pour les pixels situés en dehors de la zone utile.

Selon ce mode particulier de réalisation de l'invention, une carte binaire indiquant les pixels appartenant à la zone utile peut ainsi être créée pour les sous-images codées selon la deuxième méthode, puisque le décodeur a connaissance de la valeur de profondeur dite d'affectation qui a été affectée aux pixels situés en dehors de zone utile. Il peut ainsi identifier de par la valeur de profondeur des pixels décodée quels pixels appartiennent à la zone utile et quels pixels sont en dehors de la zone utile. La carte binaire ainsi construite peut être transmise à l'algorithme de synthèse. Les informations fournies en entrée à l'algorithme de synthèse sont ainsi identiques, que la sous-image ait été codée selon la première méthode ou selon la deuxième méthode.

Selon un autre mode particulier de réalisation de l'invention, les données de profondeur de la sous-image codées dans le flux de données comprennent, pour au moins un pixel de la sous-image, un résidu déterminé par une différence entre la valeur de profondeur dudit pixel et ladite valeur de profondeur d'affectation.

Ce mode particulier de réalisation de l'invention permet de réduire le coût de codage des données de profondeur pour la sous-image lorsque la sous-image est codée selon la deuxième méthode. En effet, lorsque la sous-image ne comprend que des informations d'arrière-plan, la dynamique des données de profondeur est faible et le codage de ces données sous la forme d'un résidu est plus avantageux.

Selon un autre mode particulier de réalisation de l'invention, un indicateur est décodé ou codé pour ladite au moins une sous-image indiquant si les données de profondeur sont codées par un résidu déterminé par une différence entre la valeur de profondeur dudit pixel et ladite valeur de profondeur d'affectation.

Ce mode particulier de réalisation de l'invention permet de signaler si les données de profondeur dans le cas d'un codage par la deuxième méthode sont codées par un résidu ou non. En effet, selon le type d'informations portées par la sous-image, le mode de codage par résidu peut être avantageux ou non. Le codage par résidu peut être avantageux lorsque la sous-image porte des informations relatives à des zones d'occlusions, alors qu'il peut être moins intéressant pour des sous-images comprenant des informations de raffinement.

Selon un autre mode particulier de réalisation de l'invention, le procédé de décodage comprend en outre:
- la détermination de la zone utile:
   - à partir des données de profondeur reconstruites et de l'information représentative de la valeur de profondeur d'affectation décodée lorsque l'indicateur indique que la sous-image est codée selon la deuxième méthode,
   - à partir de la carte binaire décodée lorsque l'indicateur indique que la sous-image est codée selon la première méthode,
- la construction d'une carte de profondeur pour la sous-image dans laquelle une valeur infinie est affectée aux pixels situés en dehors de la zone utile,
- la transmission de ladite carte de profondeur à un module de synthèse.

Selon ce mode particulier de réalisation de l'invention, la valeur infinie affectée aux valeurs de profondeur permet d'indiquer simplement à l'algorithme de synthèse les pixels appartenant à la zone utile et à la zone non utile et évite la transmission au module de synthèse de données supplémentaires, comme une carte binaire indiquant la zone utile et la zone non utile.

Selon un autre mode particulier de réalisation de l'invention, le procédé de décodage comprend en outre, lorsque l'indicateur indique que la sous-image est codée selon la deuxième méthode:
- la détermination de la zone utile à partir des données de profondeur reconstruites et de l'information représentative de la valeur de profondeur d'affectation décodée,
- la construction d'une carte binaire indiquant, pour au moins un pixel de la sous-image, si le pixel appartient ou non à la zone utile,
- la transmission de ladite carte binaire à un module de synthèse.

Selon un autre mode particulier de réalisation de l'invention, au moins deux sous-images destinées à être utilisées pour générer ladite au moins une image de ladite au moins une vue sont codées dans le flux de données, la valeur de profondeur minimale est déterminée à partir de chaque zone utile desdites au moins deux sous-images.

Selon un autre mode particulier de réalisation de l'invention, le flux de données comprend des données codées d'au moins une vue de la vidéo, ladite au moins une vue correspondant à une vue déterminée au codage à partir d'au moins une vue source.

Par vue source, on entend ici une vue originale de la scène représentée par la vidéo multi-vues. Autrement dit, il s'agit d'une séquence d'images issue d'une capture de la scène par une caméra.

Selon ce mode particulier de réalisation de l'invention, au moins une vue de base transmise au décodeur est une vue déterminée à partir d'une ou plusieurs vues sources. Cette détermination peut être réalisée au codage ou préalablement au codage.

Par exemple, il peut s'agir d'une vue synthétisée à partir de plusieurs vues source ou bien d'une vue calculée/estimée à partir de plusieurs points de vue source.

Par exemple, la vue déterminée peut correspondre à une séquence d'images dans laquelle chaque image est de taille plus grande qu'une image d'une caméra et comprend toutes les images d'un même instant de toutes les caméras d'une matrice de caméras capturant à 360°.

Selon un autre mode particulier de réalisation de l'invention, le procédé de décodage comprend en outre la réception des données de texture et des données de profondeur de ladite sous-image, ladite sous-image étant issue d'une vue intermédiaire synthétisée pour une position et une direction de visualisation d'un observateur dans un volume de visualisation.

Selon ce mode particulier de réalisation de l'invention, les données de la sous-image sont fournies au décodeur, sur requête d'une position et d'une direction de visualisation dans le volume de visualisation. Un tel mode particulier de réalisation de l'invention permet de fournir les données des sous-images à la demande, lors de la navigation d'un observateur dans la vidéo multi-vues. Les données des zones de raffinement ou d'occlusion correspondantes sont ainsi plus adaptées à la position et à la direction de visualisation de l'observateur.

L'invention concerne également un dispositif de décodage d'au moins un flux de données représentatif d'une vidéo multi-vues, ledit au moins flux de données comprenant au moins des données codées représentatives d'au moins une sous-image, les données codées comprenant des données de texture et des données de profondeur associées auxdites données de texture, ladite sous-image comprenant une zone, dite utile, destinée à être utilisée pour générer au moins une image d'au moins une vue,
le dispositif de décodage est configuré pour:
- décoder à partir dudit au moins un flux de données, un indicateur indiquant si la sous-image est codée selon une première méthode ou selon une deuxième méthode,
- lorsque l'indicateur indique que la sous-image est codée selon la première méthode, décoder pour la sous-image une carte binaire indiquant pour au moins un pixel de la sous-image si ledit pixel appartient à la zone utile ou non,
- décoder les données de texture et les données de profondeur de la sous-image, lorsque l'indicateur indique que la sous-image est codée selon la deuxième méthode, les données de profondeur de ladite sous-image pour les pixels situés en dehors de la zone utile comprenant une valeur de profondeur décodée.

Selon un mode particulier de réalisation de l'invention, un tel dispositif de décodage est compris dans un terminal ou un serveur.

L'invention concerne aussi un dispositif de codage d'un flux de données représentatif d'une vidéo multi-vues, configuré pour:
- coder au moins une sous-image comprenant des données de texture et des données de profondeur associées auxdites données de texture, ladite sous-image comprenant une zone, dite utile, destinée à être utilisée pour générer au moins une image d'au moins une vue, comprenant:
- la détermination d'une méthode de codage pour coder la sous-image parmi une première méthode et une deuxième méthode,
- le codage d'un indicateur indiquant si la sous-image est codée selon la première méthode ou selon la deuxième méthode,
- lorsque l'indicateur indique que la sous-image est codée selon la première méthode, le codage pour la sous-image d'une carte binaire indiquant pour au moins un pixel de la sous-image si ledit pixel appartient à la zone utile ou non,
- lorsque l'indicateur indique que la sous-image est codée selon la deuxième méthode:
   - la détermination d'une valeur de profondeur d'affectation,
   - l'affectation de la valeur de profondeur d'affectation aux données de profondeur de ladite sous-image pour les pixels de la sous-image situés en dehors de la zone utile,
- coder les données de texture et les données de profondeur de la sous-image.

Selon un mode particulier de réalisation de l'invention, un tel dispositif de codage est compris dans un terminal ou un serveur.

L'invention concerne également un flux de données représentatif d'une vidéo multi-vues, comprenant au moins des données codées représentatives d'au moins une sous-image, les données codées comprenant des données de texture et des données de profondeur associées auxdites données de texture, ladite sous-image comprenant une zone, dite utile, destinée à être utilisée pour générer au moins une image d'au moins une vue, le flux de données comprend:
- un indicateur indiquant si la sous-image est codée selon une première méthode ou selon une deuxième méthode,
- lorsque l'indicateur indique que la sous-image est codée selon la première méthode, des données codées représentatives d'une carte binaire indiquant pour au moins un pixel de la sous-image si ledit pixel appartient à la zone utile ou non,
- lorsque l'indicateur indique que la sous-image est codée selon la deuxième méthode, les données de profondeur de ladite sous-image pour les pixels situés en dehors de la zone utile comprenant une valeur de profondeur.

Selon un mode particulier de réalisation de l'invention, le flux de données comprend en outre, lorsque l'indicateur indique que la sous-image est codée selon la deuxième méthode, une information représentative de la valeur de profondeur d'affectation.

Selon un autre mode particulier de réalisation de l'invention, le flux de données comprend un indicateur pour ladite au moins une sous-image indiquant si les données de profondeur sont codées par l'obtention d'un résidu déterminé par une différence entre la valeur de profondeur d'un pixel et ladite valeur de profondeur d'affectation.

Selon un autre mode particulier de réalisation de l'invention, le flux de données comprend en outre des données codées d'au moins une vue de la vidéo, ladite au moins une vue correspondant à une vue synthétisée au codage à partir d'au moins une vue source.

Le procédé de décodage, respectivement le procédé de codage, selon l'invention peut être mis en oeuvre de diverses manières, notamment sous forme câblée ou sous forme logicielle. Selon un mode particulier de réalisation de l'invention, le procédé de décodage, respectivement le procédé de codage, est mis en oeuvre par un programme d'ordinateur. L'invention concerne également un programme d'ordinateur comportant des instructions pour la mise en oeuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, une clé USB, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
[Fig. 1] La figure 1 illustre schématiquement un exemple d'un système de captures multi-vues d'une scène.
[Fig. 2] La figure 2 illustre un exemple d'entrées/sorties d'un module de synthèse de vues.
[Fig. 3] La figure 3 illustre schématiquement un exemple d'un codeur multi-vues basé sur le codage de patchs.
[Fig. 4] La figure 4 illustre des étapes d'un procédé de codage selon un mode particulier de réalisation de l'invention.
[Fig. 5] La figure 5 illustre un exemple d'une image regroupant des sous-images à coder.
[Fig. 6] La figure 6 illustre un exemple d'une image comprenant des sous-images et une carte binaire correspondante indiquant les zones utiles et non utiles des sous-images pour l'image illustrée en figure 5.
[Fig. 7] La figure 7 illustre un exemple de remplissage d'une zone non utile de la texture d'un patch selon un mode particulier de réalisation de l'invention.
[Fig. 8] La figure 8 illustre un exemple de remplissage d'une zone non utile de la profondeur d'un patch selon un mode particulier de réalisation de l'invention.
[Fig. 9] La figure 9 illustre des étapes d'un procédé de décodage selon un mode particulier de réalisation de l'invention.
[Fig. 10] La figure 10 illustre des étapes d'un procédé de décodage selon un autre mode particulier de réalisation de l'invention.
[Fig. 11] La figure 11 illustre des étapes d'un procédé de décodage selon un autre mode particulier de réalisation de l'invention.
[Fig. 12] La figure 12 illustre un exemple d'architecture d'un dispositif de codage selon un mode particulier de réalisation de l'invention.
[Fig. 13] La figure 13 illustre un exemple d'architecture d'un dispositif de décodage selon un mode particulier de réalisation de l'invention.
[Fig. 14] La figure 14 illustre un exemple de flux de données selon des modes particuliers de réalisation de l'invention.

### 5. Description d'un mode de réalisation de l'invention

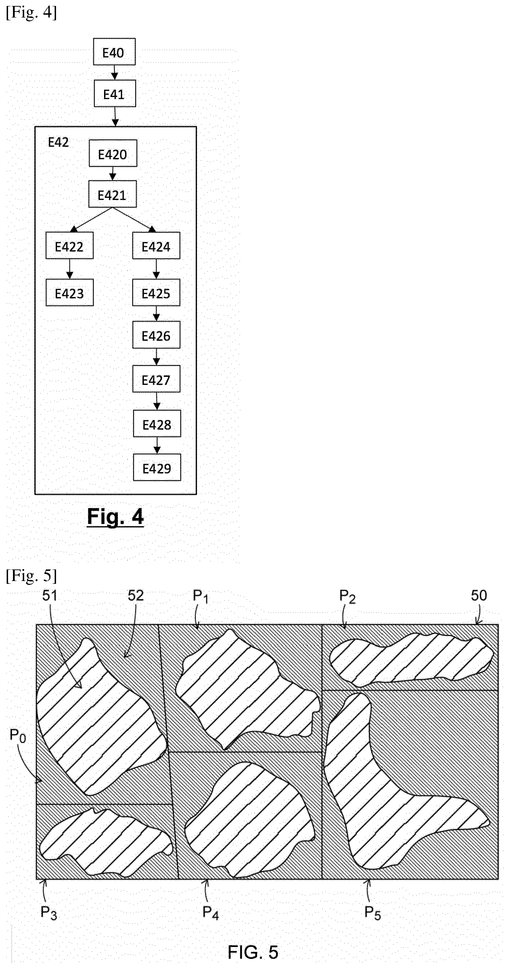

La figure 4 illustre des étapes d'un procédé de codage d"au moins un flux de données représentatif d'une vidéo multi-vues selon un mode particulier de réalisation de l'invention.

Selon l'invention, la vidéo multi-vues est codée selon un schéma de codage tel que présenté en relation avec la figure 3 dans lequel une ou des vues dites de base sont codées dans le flux de données et dans lequel des sous-images ou patchs comprenant des données de texture et de profondeur sont également codées dans le flux de données et permettent au décodeur de synthétiser d'autres vues de la scène qui n'ont pas été codées dans le flux de données. On décrit ci-après les étapes d'un tel schéma de codage relatives à un mode particulier de réalisation de l'invention.

On considère ici par exemple que la scène a été capturée selon 4 points de vues V0-V3 et que les cartes de profondeur d0-d3 associées à chacune des images des vues ont été préalablement estimées. Par vue, on entend ici une séquence d'images représentant la scène capturée à partir d'un point de vue. Chaque vue est donc une vidéo, i.e., une séquence d'images, et pour chaque image de la vue, une carte de profondeur est déterminée.

Lors d'une étape E40, les vues V0-V3 et les cartes de profondeurs associées d0-d3 sont codées et décodées, par exemple par un codeur HEVC, ou tout autre codeur 2D ou multi-vues adapté. Ces vues sont considérées comme des vues de base et seront transmises au décodeur. Elles pourront servir pour synthétiser des vues intermédiaires côté décodeur. En variante, toutes les vues V0-V3 peuvent ne pas être codées, par exemple une seule vue, ou 2 ou 3 peuvent être codées et transmises au décodeur.

Selon un mode particulier de réalisation de l'invention, lors de l'étape E40, une vue de base codée dans le flux de données correspond à une vue synthétisée à partir d'une ou plusieurs vues V0-V3.

Lors d'une étape E41, une vue intermédiaire Vi est synthétisée à l'aide des vues codées et qui seront transmises au décodeur. Classiquement, une telle vue intermédiaire Vi comprend des données de texture et des données de profondeur associées aux données de texture. Lors d'une étape E42, à partir de cette vue intermédiaire Vi et des vues de base codées/décodées, une ou des zones sont extraites de la vue intermédiaire Vi. Le procédé est présenté ici dans le cas d'une vue intermédiaire Vi synthétisée. Bien entendu, le procédé s'applique de manière identique si plusieurs vues intermédiaires sont synthétisées, une ou des zones étant extraites de ces vues intermédiaires.

L'objet de l'invention ne réside pas dans la détermination des zones à extraire. La méthode d'extraction de ces zones ne sera donc pas développée plus avant.

Les zones extraites peuvent correspondre à des zones d'occlusion, i.e. des zones non visibles dans les vues de base et visibles dans la vue intermédiaire, ou bien à des zones déjà présentes dans les vues de base mais fournissant une qualité de synthèse insuffisante dans la vue synthétisée, par exemple à cause de déformations apparaissant à la synthèse. Dans ce dernier cas, la vue intermédiaire synthétisée correspond alors à une vue capturée par une caméra. La vue intermédiaire à partir de laquelle les zones sont extraites peut être une vue capturée par une caméra mais non codée dans le flux de données. Elle pourra donc être synthétisée côté décodeur et raffinée par les sous-images codées dans le flux de données.

Les zones extraites sont représentées sous la forme de patchs de forme arbitraire. Par la suite, ces patchs sont appelés sous-images. Une sous-image comprend des données de texture, des données de profondeur, une position dans chaque vue et une taille.

On comprend bien que pour la vue intermédiaire, une ou plusieurs sous-images peuvent être extraites pour une même image de la vue intermédiaire. De même, une sous-image représentant une même zone extraite de la vue intermédiaire peut être extraite pour différentes images de la vue intermédiaire. De sorte les données de texture et de profondeur de la sous-image varient alors dans le temps et forment une séquence de sous-images. Des exemples de sous-images P₀-P₅ extraites à partir d'une image de la vue intermédiaire Vi sont illustrés en figure 5. Dans l'exemple de la figure 5, les sous-images sont regroupées dans une image rectangulaire 50 afin de faciliter leur codage. On comprend bien que selon les variantes de réalisation d'une telle image, l'image 50 peut comprendre des sous-images extraites de différentes images de la vue intermédiaire, ou bien d'une seule image, ou encore des sous-images extraites de la vue intermédiaire Vi et également d'autres vues intermédiaires.

De même, les sous-images peuvent être codées sans être regroupées dans une image rectangulaire. Chaque sous-image est alors traitée comme une image ou une séquence d'images lorsque la sous-image varie dans le temps.

Sur la figure 5, de par la représentation des zones extraites de la vue intermédiaire sous une forme adaptée pour le codage (forme rectangulaire ou au moins quadrilatère), il apparaît que les sous-images comprennent des données dites utiles (51, zones avec de grandes hachures sur la figure 5) correspondant aux zones extraites et qui sont susceptibles d'être utilisées pour la synthèse de la vue intermédiaire ou d'autres vues, et des données dites non utiles (52, zones avec de fines hachures sur la figure 5) qui comprennent des données de texture et de profondeur à 0.

Les données utiles de la sous-image peuvent être comprises dans une zone de la sous-image ou bien dans plusieurs zones disjointes de la sous-image, de sorte que la sous-image comprend alors plusieurs zones dites utiles à la synthèse.

Le procédé de codage selon l'invention vise à réduire le coût de codage des zones non utiles.

Par la suite, l'invention est décrite dans le cas où on considère que les sous-images sont regroupées dans une grande image 50. Toutefois, le principe général de l'invention s'applique de manière similaire au cas où les sous-images ne sont pas regroupées dans une grande image mais traitées individuellement.

Lors d'une étape E42, la ou les sous-images sont codées. Pour cela, selon l'invention, deux méthodes de codage des sous-images peuvent être utilisées. Pour une sous-image considérée, une mise en compétition des deux méthodes de codage est mise en oeuvre afin de sélectionner la méthode de codage offrant le meilleur compromis débit/distorsion. Un indicateur est codé dans le flux pour indiquer, pour la sous-image, quelle méthode de codage est utilisée.

On décrit ci-après les deux méthodes de codage.

Selon une première méthode de codage, la sous-image est codée en utilisant une carte binaire indiquant, pour un pixel considéré de la sous-image, si le pixel appartient à la zone utile (par exemple dans la carte binaire, le pixel prend la valeur 1) ou non (par exemple dans la carte binaire, le pixel prend la valeur 0).

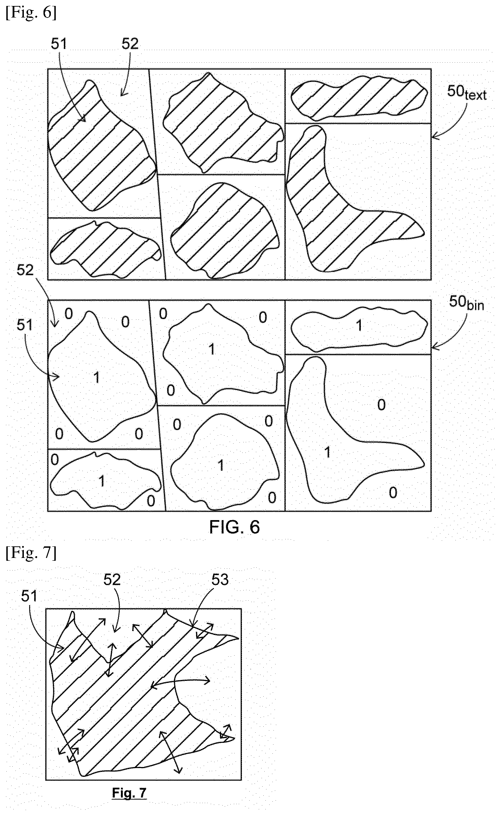

La figure 6 illustre un exemple d'une image (50ₜₑₓₜ) comprenant des sous-images et une carte binaire (50_{bin}) correspondante indiquant les zones utiles (51, zones hachurées dans l'image de texture 50ₜₑₓₜ) et non utiles (52, zones en blanc dans l'image de texture 50ₜₑₓₜ) des sous-images pour l'image 50 illustrée en figure 5. Selon cette première méthode de codage, seules les données de texture et de profondeur des pixels situés dans la zone utile sont codées et transmises au décodeur, la carte binaire associée étant codée pour tous les pixels de la sous-image.

Il est à noter ici qu'il n'est pas possible d'utiliser une valeur prédéfinie comme référence dans les données de texture par exemple, comme un 0, par exemple, qui préciserait que le pixel en question n'est pas utile. En effet, après codage et décodage de la texture, la valeur du pixel n'est pas garantie, et peut ne plus être à zéro. De plus, d'autres valeurs nulles peuvent apparaître pour des pixels appartenant à la zone utile.

Selon une deuxième méthode de codage, la sous-image est codée à l'aide d'un remplissage de la zone non utile, tant pour les données de texture que pour les données de profondeur. La sous-image est ensuite codée de manière classique en codant tous les pixels de la sous-image.

Pour cela, lors d'une étape E420, il est déterminé la méthode de codage à utiliser pour coder la sous-image, parmi la première méthode et la deuxième méthode mentionnées ci-dessus. Par exemple, une mise en compétition du codage des deux méthodes est mise en oeuvre et la méthode fournissant le meilleur compromis débit/distorsion est sélectionnée. De manière connue, une telle mise en compétition est réalisée par une simulation du codage respectivement selon les deux méthodes, un calcul du débit utilisé par chaque méthode et la distorsion associée calculée entre les valeurs originales et les valeurs reconstruites des données de texture et/ou de profondeur.

Lors d'une étape E421, un indicateur indiquant si la sous-image est codée selon la première méthode ou selon la deuxième méthode est codé dans le flux de données. Lorsque l'indicateur indique que la sous-image est codée selon la première méthode, le procédé passe à l'étape E422. Lorsque l'indicateur indique que la sous-image est codée selon la deuxième méthode, le procédé passe à l'étape E424.

Lors de l'étape E422, la carte binaire de la sous-image est codée. Par exemple, un codage entropique est utilisé.

Lors d'une étape E423, les données de texture et les données de profondeur sont codées pour la sous-image en ne considérant que les pixels situés dans la zone utile de la sous-image. Ces pixels sont identifiés à l'aide de la carte binaire. Les données de texture et les données de profondeur sont codées de manière classique par exemple par un codeur HEVC ou tout autre codeur 2D ou 3D.

Lors de l'étape E424, l'indicateur indiquant que la sous-image est codée selon la deuxième méthode, une valeur de profondeur d'affectation d* est déterminée.

Par exemple, la valeur de profondeur d'affectation d* est déterminée à partir d'une valeur de profondeur minimale dₘᵢₙ déterminée sur au moins la zone utile de la sous-image, diminuée d'une valeur prédéterminée *delta.* La valeur de profondeur minimale dₘᵢₙ correspond à la plus petite valeur de profondeur des pixels de la sous-image appartenant à la zone utile, i.e. à la profondeur du pixel de la sous-image appartenant à la zone utile, le plus éloigné: dₘᵢₙ=min (dᵢ), où dᵢ correspond aux valeurs de profondeur des pixels de la zone utile et min la fonction renvoyant la plus petite valeur.

Cette valeur minimale dₘᵢₙ est diminuée d'une valeur *delta* permettant de prendre en compte l'erreur de quantification introduite lors du codage des valeurs de profondeur. Par exemple, la valeur d'affectation d* est obtenue par d* = dₘᵢₙ- *delta.*

Différentes valeurs de *delta* sont possibles, par exemple *delta* est égale à 10.

Selon un mode particulier de réalisation de l'invention, la valeur de profondeur minimale est déterminée à partir de la zone utile de plusieurs sous-images. Par exemple, lorsque les sous-images sont regroupées dans une grande image, les zones utiles de toutes les sous-images sont parcourues afin de déterminer la valeur minimale de profondeur parmi toutes les sous-images de la grande image. Un tel mode particulier de réalisation de l'invention permet d'avoir une valeur de profondeur d'affectation plus homogène pour toutes les sous-images d'une grande image.

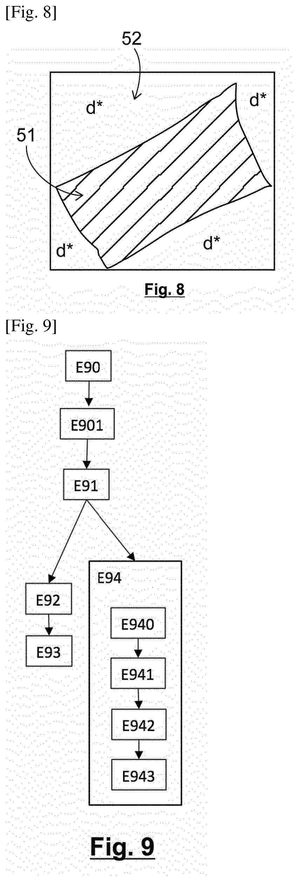

Lors d'une étape E425, la valeur de profondeur d'affectation d* est affectée comme valeur de profondeur aux pixels situés en dehors de la zone utile. Une telle étape est illustrée en figure 8 représentant des données de profondeur d'une sous-image. Les pixels de la zone utile (51) comprennent la valeur de profondeur qui a été estimée pour ces pixels lors de l'extraction de la zone utile à partir de la vue intermédiaire. Les pixels de la zone non utile (52) comprennent la valeur de profondeur d'affectation d*.

Lors d'une étape E426, une valeur de texture est également affectée aux pixels situés en dehors de la zone utile.

Par exemple, le remplissage de la zone non utile est fait par miroir. Les valeurs de texture des pixels à l'extérieur de la zone utile sont calculées de sorte à reproduire au mieux les données présentes à l'intérieur de la zone utile, comme présenté sur la figure 7. Sur la figure 7, une sous-image est représentée. Des données de la zone utile (51) sont propagées dans la zone non utile (52) de manière symétrique par rapport à la frontière (53) entre la zone utile et la zone non utile.

Selon un autre exemple, les valeurs de texture des pixels situés à l'extérieur (52) de la zone utile correspondent à la moyenne des valeurs de texture des pixels de la zone utile (51). Dans cet exemple, les pixels de la zone non utile sont remplis avec une même valeur.

Lors d'une étape E427, les données de texture et les données de profondeur pour la sous-image sont codées en considérant tous les pixels de la sous-image. Autrement dit, selon cette deuxième méthode de codage, les pixels de la zone utile et les pixels de la zone non utile sont codés. Les données de texture et les données de profondeur sont codées de manière classique par exemple par un codeur HEVC ou tout autre codeur 2D ou 3D.

Selon un mode particulier de réalisation de l'invention, les données de profondeur sont codées en différentiel par rapport à la valeur de profondeur d'affectation d*. Selon ce mode particulier de réalisation de l'invention, un résidu de prédiction est alors calculé par res(x,y)=prof(x,y)- d*, avec prof(x,y) la valeur de de profondeur pour le pixel (x,y) de la sous-image et res(x,y) la valeur de résidu pour le pixel (x,y) de la sous-image.

Lors du codage des données de profondeur pour la sous-image, c'est donc le résidu tel que mentionné ci-dessus qui est codé.

Selon ce mode particulier de réalisation de l'invention, afin que le décodeur puisse reconstruire des données de profondeur pour la sous-image à partir du résidu, le décodeur doit avoir connaissance de la valeur de profondeur d'affectation d*.

Ainsi, selon ce mode particulier de réalisation de l'invention, lors d'une étape E428, la valeur de profondeur d'affectation d* est codée dans le flux de données.

Selon une variante de ce mode particulier de réalisation de l'invention, le codage en différentiel des données de profondeur est mis en compétition avec un codage classique des données de profondeur. Ainsi, selon cette variante, au cours de l'étape E420, lorsque le codage de la sous-image selon la deuxième méthode est testé, il est également déterminé si les données de profondeur selon cette deuxième méthode de codage sont codées par un résidu ou non. Le codage des données de profondeur par résidu et le codage des données de profondeur de manière classique sont simulés pour sélectionner le mode de codage fournissant le meilleur compromis débit/distorsion.

Selon cette variante de réalisation de l'invention, une information indiquant quel mode de codage des données de profondeur est sélectionné doit alors être codée dans le flux de données. Ainsi, au cours d'une étape E429, un indicateur de codage des données de profondeur est codé dans le flux de données pour la sous-image. Un tel indicateur indique si les données de profondeur sont codées par un résidu ou non.

La figure 9 illustre des étapes d'un procédé de décodage d'un flux de données représentatif d'une vidéo multi-vues selon un mode particulier de réalisation de l'invention. Par exemple, le flux de données a été généré par le procédé de codage décrit en relation avec la figure 4.

Selon l'invention, le flux de données comprend au moins des données codées relatives au codage d'une ou plusieurs vues de base de la vidéo multi-vues et des données codées représentatives de sous-images ou patchs comprenant des données de texture et de profondeur. Une fois décodées, ces sous-images permettent au décodeur de synthétiser d'autres vues de la scène qui n'ont pas été codées dans le flux de données par exemple. On décrit ci-après les étapes d'un tel schéma de décodage relatives à un mode particulier de réalisation de l'invention.

Lors d'une étape E90, les vues de base et les cartes de profondeurs associées sont décodées du flux de données.

Selon un mode particulier de réalisation de l'invention, une vue de base décodée à partir du flux de données correspond à une vue synthétisée au codeur à partir d'une ou plusieurs vues capturées.

On procède ensuite au décodage d'une sous-image codée dans le flux de données. Par sous-image, on entend ici une sous-image représentant une zone utile extraite au codeur à partir d'une vue intermédiaire. Cette sous-image peut être regroupée avec d'autres sous-images dans une image plus grande.

Lors d'une étape E91, un indicateur indiquant pour la sous-image si la sous-image est codée selon la première méthode ou selon la deuxième méthode qui ont été décrites ci-dessus, est décodé.

Lorsque l'indicateur indique que la sous-image est codée selon la première méthode, le procédé passe à l'étape E92. Lorsque l'indicateur indique que la sous-image est codée selon la deuxième méthode, le procédé passe à l'étape E94.

Lors de l'étape E92, une carte binaire est décodée pour la sous-image. Une telle carte binaire indique pour un pixel considéré de la sous-image, si le pixel appartient à la zone utile ou non.

Lors d'une étape E93, les données de texture et les données de profondeur de la sous-image sont décodées et reconstruites en ne considérant que les pixels situés dans la zone utile de la sous-image. Ces pixels sont identifiés à l'aide de la carte binaire.

A l'issue de la reconstruction, les pixels de la sous-image situés en dehors de la zone utile comprennent des valeurs de texture et des valeurs de profondeur à 0.

Lorsque l'indicateur indique que la sous-image est codée selon la deuxième méthode, lors de l'étape E94, les données de texture et les données de profondeur de la sous-image sont décodées de la manière suivante.

Lors d'une étape E940, les données de texture et les données de profondeur de la sous-image sont décodées et reconstruites de manière classique en considérant tous les pixels de la sous-image. A l'issue de la reconstruction, tous les pixels de la sous-image comprennent une valeur de texture et une valeur de profondeur. Les pixels de la sous-image situés en dehors de la zone utile comprennent une valeur de texture et une valeur de profondeur telles que déterminées lors du codage.

Selon un mode particulier de réalisation de l'invention, lorsque l'indicateur indique que la sous-image est codée selon la deuxième méthode, le décodeur ne fait pas la distinction entre la zone utile et la zone non utile de la sous-image.

Toutefois, la valeur de profondeur décodée pour les pixels de la zone non utile de la sous-image permet à un algorithme de synthèse de ne pas utiliser ces pixels lors de la synthèse d'une vue intermédiaire. En effet, selon un mode particulier de réalisation de l'invention, de tels pixels ont été affectés d'une valeur de profondeur déterminée à partir de la valeur de profondeur minimale de la zone de la sous-image, diminuée d'une valeur permettant de prendre en compte les erreurs de quantification. De sorte que ces pixels sont considérés par l'algorithme de synthèse comme les points les plus éloignés.

Selon un autre mode particulier de réalisation de l'invention, lors d'une étape E941, une information représentative de la valeur de profondeur d'affectation d* affectée au codage aux pixels situés en dehors de la zone utile de la sous-image est décodée du flux de données. Selon ce mode particulier de réalisation de l'invention, une carte binaire peut ainsi être construite pour la sous-image afin d'identifier les pixels de la zone utile et les pixels de la zone non utile, dans le cas par exemple où une telle carte serait nécessaire à l'algorithme de synthèse.

En variante de ce mode particulier de réalisation, les données de profondeur de la sous-image ont été codées en différentiel par rapport à la valeur de profondeur d'affectation d*.

Ainsi, selon cette variante de réalisation, lors d'une étape E943, les données de profondeur de la sous-image sont reconstruites en ajoutant aux valeurs de résidus de profondeur de la sous-image qui ont été décodées à l'étape E940, la valeur de profondeur d'affectation d* décodée.

Selon une autre variante, lors d'une étape E942, un indicateur de codage des données de profondeur pour la sous-image est décodé du flux de données. Un tel indicateur de codage indique si les données de profondeur de la sous-image sont codées en différentiel ou non.

Selon un mode particulier de réalisation de l'invention, le décodeur fonctionne en mode client-serveur avec un serveur fournissant les données d'une vidéo multi-vues dans laquelle un observateur est en train de naviguer.

Selon ce mode particulier de réalisation de l'invention, le procédé de décodage comprend une étape préalable E901 de réception des données de texture et de profondeur de la sous-image. Par exemple, de telles données de la sous-image sont reçues suite à une requête émise par le décodeur pour une position et une direction de visualisation correspondant à la position et à la direction de visualisation d'un observateur dans le volume de visualisation, ou pour une position et une direction de visualisation proches de celles de l'observateur.

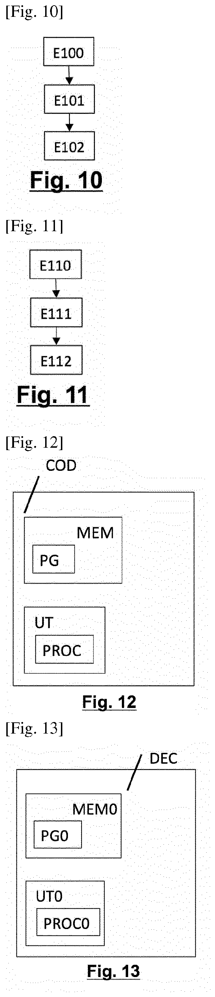

La figure 10 illustre des étapes du procédé de décodage selon un autre mode particulier de réalisation de l'invention. Selon ce mode particulier de réalisation de l'invention, une valeur infinie est affectée aux valeurs de profondeur des pixels de la sous-image reconstruite qui n'appartiennent pas à la zone utile afin de permettre à l'algorithme de synthèse d'identifier la zone utile et la zone non utile.

Pour cela, lors d'une étape E100, la zone utile de la sous-image reconstruite est déterminée. Lorsque l'indicateur décodé à l'étape E91 indique que la sous-image est codée selon la deuxième méthode, la zone utile est déterminée à partir des données de profondeur reconstruites et de la valeur de profondeur d'affectation d* décodée. Lorsque l'indicateur décodé à l'étape E91 indique que la sous-image est codée selon la première méthode, la zone utile est déterminée à partir de la carte binaire décodée à l'étape E92.

Lors d'une étape E101, une carte de profondeur pour la sous-image est construite, dans laquelle les pixels de la zone utile prennent leur valeur de profondeur décodée et les pixels situés en dehors de la zone utile sont affectés d'une valeur infinie.

Lors d'une étape E102, la carte de profondeur est transmise à un module de synthèse.

La figure 11 illustre des étapes du procédé de décodage selon un autre mode particulier de réalisation de l'invention.

Lorsque l'indicateur décodé à l'étape E91 indique que la sous-image est codée selon la deuxième méthode, lors d'une étape E110, les pixels de la zone utile sont déterminés à partir des données de profondeur reconstruites et de la valeur de profondeur d'affectation d* décodée.

Lors d'une étape E111, une carte binaire est construite pour la sous-image. Une telle carte binaire indique pour un pixel considéré de la sous-image, si le pixel appartient ou non à la zone utile. Une telle carte binaire est semblable à la carte binaire qui aurait été décodée dans le cas où la sous-image avait été codée selon la première méthode.

Lors d'une étape E112, la carte binaire est transmise à un module de synthèse.

La figure 12 présente la structure simplifiée d'un dispositif de codage COD adapté pour mettre en oeuvre le procédé de codage selon l'un quelconque des modes particuliers de réalisation de l'invention.

Selon un mode particulier de réalisation de l'invention, les étapes du procédé de codage sont mises en oeuvre par des instructions de programme d'ordinateur. Pour cela, le dispositif de codage COD a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de codage tel que décrit ci-dessus, lorsque le programme est exécuté par le processeur PROC.

A l'initialisation, les instructions de code du programme d'ordinateur PG sont par exemple chargées dans une mémoire RAM (non représentée) avant d'être exécutées par le processeur PROC. Le processeur PROC de l'unité de traitement UT met notamment en oeuvre les étapes du procédé de codage décrit ci-dessus, selon les instructions du programme d'ordinateur PG.

La figure 13 présente la structure simplifiée d'un dispositif de décodage DEC adapté pour mettre en oeuvre le procédé de décodage selon l'un quelconque des modes particuliers de réalisation de l'invention.

Selon un mode particulier de réalisation de l'invention, le dispositif de décodage DEC a l'architecture classique d'un ordinateur et comprend notamment une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en oeuvre les étapes du procédé de décodage tel que décrit ci-dessus, lorsque le programme est exécuté par le processeur PROC0.

A l'initialisation, les instructions de code du programme d'ordinateur PG0 sont par exemple chargées dans une mémoire RAM (non représentée) avant d'être exécutées par le processeur PROC0. Le processeur PROC0 de l'unité de traitement UT0 met notamment en oeuvre les étapes du procédé de décodage décrit ci-dessus, selon les instructions du programme d'ordinateur PG0.

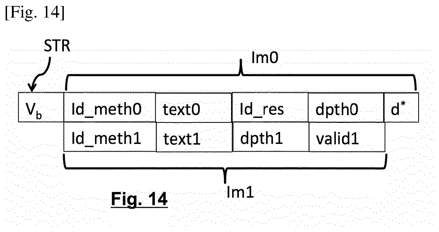

La figure 14 illustre un exemple de flux de données STR selon des modes particuliers de réalisation de l'invention. Par exemple, le flux de données STR est généré par le procédé de codage tel que décrit en relation avec la figure 4.

En référence à la figure 14, le flux de données STR est représentatif d'une vidéo multi-vues, et comprend notamment des données codées V_{b} représentatives d'une ou plusieurs vues de base, et des données codées représentatives d'au moins une sous-image comprenant des données de texture (text0, text1) et des données de profondeur (dpth0, dpth1) associées auxdites données de texture.

Selon un mode particulier de réalisation de l'invention, une vue de base codée dans le flux de données correspond à une vue synthétisée au codage à partir d'au moins une vue source de la scène.

Le flux de données STR illustré en figure 14 est un exemple illustratif. Il est présenté ici comprenant deux sous-images (Im0, Im1). Les sous-images comprises dans le flux de données comprennent une zone, dite utile, destinée à être utilisée pour générer au moins une image d'au moins une vue de la scène capturée par la vidéo multi-vues.

En fonction des différents modes particuliers de réalisation de l'invention, le flux de données STR comprend les données suivantes pour les sous-images:
- un indicateur (Id_meth0, Id_meth1) indiquant si la sous-image est codée selon la première méthode ou selon la deuxième méthode qui ont été décrites ci-dessus,
- lorsque l'indicateur indique que la sous-image est codée selon la première méthode (Id_meth1 dans l'exemple décrit ici), des données codées représentatives d'une carte binaire (valid1) indiquant pour un pixel considéré de la sous-image, si ledit pixel appartient à la zone utile ou non.

Selon un mode particulier de réalisation de l'invention, lorsque l'indicateur indique que la sous-image est codée selon la deuxième méthode (Id_meth0 dans l'exemple décrit ici), le flux de données STR comprend une information représentative de la valeur de profondeur d'affectation d*.

Selon un autre mode particulier de réalisation de l'invention, lorsque l'indicateur indique que la sous-image est codée selon la deuxième méthode, le flux de données STR comprend un indicateur de codage (Id_res) pour la sous-image indiquant si les données de profondeur sont codées par l'obtention d'un résidu déterminé par une différence entre la valeur de profondeur d'un pixel et la valeur de profondeur d'affectation d*.

L'exemple décrit ci-dessus est simplement illustratif et non limitatif. Les données codées décrites ci-dessus peuvent être comprises dans un même flux de données ou plusieurs flux de données ou sous-flux d'un même flux de données. Egalement, certaines des données décrites ci-dessus et d'autres données non décrites peuvent être comprises dans des métadonnées associées à un ou plusieurs flux de données.

Par exemple, les données de texture et les données profondeur peuvent être codées dans des flux distincts.

Selon un autre exemple, les données codées des vues de base peuvent être comprises dans un flux de données vidéo, et les données codées relatives aux sous-images peuvent être comprises dans des métadonnées associées au flux de données vidéo.

Un autre mode particulier de réalisation de l'invention concerne un procédé de décodage d'au moins un flux de données représentatif d'une vidéo multi-vues, ledit au moins un flux de données comprenant au moins des données codées représentatives d'au moins une sous-image, les données codées comprenant des données de texture et des données de profondeur associées auxdites données de texture, ladite sous-image comprenant au moins une zone, dite utile, et une zone dite non utile, ladite zone utile correspondant à une zone extraite d'une vue de la vidéo multi-vues non codée dans le flux de données, la zone utile étant destinée à être utilisée pour générer au moins une image d'au moins une vue, le procédé de décodage comprend:
- le décodage à partir dudit au moins un flux de données, d'un indicateur indiquant si la sous-image est codée selon une première méthode ou selon une deuxième méthode,
- lorsque l'indicateur indique que la sous-image est codée selon la première méthode, le décodage pour la sous-image d'une carte binaire indiquant pour au moins un pixel de la sous-image si ledit pixel appartient à la zone utile ou non,
- le décodage des données de texture et des données de profondeur de la sous-image, lorsque l'indicateur indique que la sous-image est codée selon la deuxième méthode, les données de profondeur de ladite sous-image pour les pixels situés en dehors de la zone utile comprenant une valeur de profondeur d'affectation.

Un autre mode particulier de réalisation de l'invention concerne un procédé de codage d'un flux de données représentatif d'une vidéo multi-vues, comprenant le codage d'au moins une sous-image comprenant des données de texture et des données de profondeur associées auxdites données de texture, ladite sous-image comprenant une zone, dite utile, et une zone dite non utile, ladite zone utile correspondant à une zone extraite d'une vue de la vidéo multi-vues non codée dans le flux de données, la zone utile étant destinée à être utilisée pour générer au moins une image d'au moins une vue, le codage de ladite au moins une sous-image comprend:
- la détermination d'une méthode de codage pour coder la sous-image parmi une première méthode et une deuxième méthode,
- le codage d'un indicateur indiquant si la sous-image est codée selon la première méthode ou selon la deuxième méthode,
- lorsque l'indicateur indique que la sous-image est codée selon la première méthode, le codage pour la sous-image d'une carte binaire indiquant pour au moins un pixel de la sous-image si ledit pixel appartient à la zone utile ou non,
- lorsque l'indicateur indique que la sous-image est codée selon la deuxième méthode, la détermination d'une valeur de profondeur d'affectation et l'affectation de la valeur de profondeur d'affectation aux données de profondeur de la dite sous-image pour les pixels de la sous-image situés en dehors de la zone utile,
- le codage des données de texture et des données de profondeur de la sous-image.

Selon un mode de réalisation particulier de l'invention, au moins deux zones utiles appartenant respectivement à au moins deux sous-images, lesdites au moins deux zones utiles étant destinées à être utilisées pour générer ladite au moins une image de ladite au moins une vue, sont codées dans le flux de données, la valeur de profondeur minimale est déterminée à partir desdites au moins deux zones utiles.

Un mode particulier de l'invention concerne un dispositif de décodage d'au moins un flux de données représentatif d'une vidéo multi-vues, ledit au moins flux de données comprenant au moins des données codées représentatives d'au moins une sous-image, les données codées comprenant des données de texture et des données de profondeur associées auxdites données de texture, ladite sous-image comprenant une zone, dite utile, et une zone dite non utile, ladite zone utile correspondant à une zone extraite d'une vue de la vidéo multi-vues non codée dans le flux de données, la zone utile étant destinée à être utilisée pour générer au moins une image d'au moins une vue, le dispositif de décodage est configuré pour:
- décoder à partir dudit au moins un flux de données, un indicateur indiquant si la sous-image est codée selon une première méthode ou selon une deuxième méthode,
- lorsque l'indicateur indique que la sous-image est codée selon la première méthode, décoder pour la sous-image une carte binaire indiquant pour au moins un pixel de la sous-image si ledit pixel appartient à la zone utile ou non,
- décoder les données de texture et les données de profondeur de la sous-image, lorsque l'indicateur indique que la sous-image est codée selon la deuxième méthode, les données de profondeur de ladite sous-image pour les pixels situés en dehors de la zone utile comprenant une valeur de profondeur d'affectation.

Un mode de réalisation de l'invention concerne aussi un dispositif de codage d'un flux de données représentatif d'une vidéo multi-vues, configuré pour coder au moins une sous-image comprenant des données de texture et des données de profondeur associées auxdites données de texture, ladite sous-image comprenant une zone, dite utile, et une zone dite non utile, ladite zone utile correspondant à une zone extraite d'une vue de la vidéo multi-vues non codée dans le flux de données, la zone utile étant destinée à être utilisée pour générer au moins une image d'au moins une vue, comprenant:
- la détermination d'une méthode de codage pour coder la sous-image parmi une première méthode et une deuxième méthode,
- le codage d'un indicateur indiquant si la sous-image est codée selon la première méthode ou selon la deuxième méthode,
- lorsque l'indicateur indique que la sous-image est codée selon la première méthode, le codage pour la sous-image d'une carte binaire indiquant pour au moins un pixel de la sous-image si ledit pixel appartient à la zone utile ou non,
- lorsque l'indicateur indique que la sous-image est codée selon la deuxième méthode, la détermination d'une valeur de profondeur d'affectation, et l'affectation de la valeur de profondeur d'affectation aux données de profondeur de ladite sous-image pour les pixels de la sous-image situés en dehors de la zone utile,
- le codage des données de texture et des données de profondeur de la sous-image.

Un mode particulier de réalisation concerne un flux de données représentatif d'une vidéo multi-vues, comprenant au moins des données codées représentatives d'au moins une sous-image, les données codées comprenant des données de texture et des données de profondeur associées auxdites données de texture, ladite sous-image comprenant une zone, dite utile, et une zone dite non utile, ladite zone utile correspondant à une zone extraite d'une vue de la vidéo multi-vues non codée dans le flux de données, la zone utile étant destinée à être utilisée pour générer au moins une image d'au moins une vue, le flux de données comprend:
- un indicateur indiquant si la sous-image est codée selon une première méthode ou selon une deuxième méthode,
- lorsque l'indicateur indique que la sous-image est codée selon la première méthode, des données codées représentatives d'une carte binaire indiquant pour au moins un pixel de la sous-image si ledit pixel appartient à la zone utile ou non,
- lorsque l'indicateur indique que la sous-image est codée selon la deuxième méthode, les données de profondeur de ladite sous-image pour les pixels situés en dehors de la zone utile comprenant une valeur de profondeur.

## Revendications

1. Procédé de décodage d'au moins un flux de données représentatif d'une vidéo multi-vues, ledit au moins un flux de données comprenant au moins des données codées représentatives d'au moins une vue, dite de base, de la vidéo multi-vues et d'au moins une sous-image, les données codées de la au moins une vue de base comprenant des données de texture et des données de profondeur associées auxdites données de texture, ladite au moins une sous-image comprenant une zone dite utile et une zone dite non utile, ladite zone utile correspondant à une zone extraite d'une vue de la vidéo multi-vues non codée dans le flux de données, dite vue intermédiaire, les données codées de la au moins une sous-image comprenant des données de texture et des données de profondeur associées auxdites données de texture, la zone utile étant destinée à être utilisée pour générer au moins une image de ladite vue intermédiaire ou d'au moins une autre vue, le procédé de décodage comprend:
- le décodage à partir dudit au moins un flux de données, d'un indicateur indiquant si la sous-image est codée selon une première méthode ou selon une deuxième méthode,
- lorsque l'indicateur indique que la sous-image est codée selon la première méthode :
le décodage pour la sous-image d'une carte binaire indiquant, pour au moins un pixel de la sous-image, si ledit pixel appartient à la zone utile ou non, et,
si ledit pixel appartient à la zone utile, le décodage pour la sous-image des données de texture et des données de profondeur associées auxdites données de texture,
- lorsque l'indicateur indique que la sous-image est codée selon la deuxième méthode :
le décodage à partir dudit au moins un flux de données, d'une information représentative d'une valeur de profondeur d'affectation des données de profondeur de la sous-image,
le décodage des données de profondeur de la sous-image à partir de ladite valeur de profondeur d'affectation,
la construction d'une carte indiquant, pour au moins un pixel de la sous-image, si le pixel appartient ou non à la zone utile, à partir des données de profondeur décodées et de l'information représentative de la valeur de profondeur d'affectation décodée.

2. Procédé selon la revendication 1, comprenant en outre la transmission de ladite carte à un module de synthèse lorsque l'indicateur indique que la sous-image est codée selon la deuxième méthode.

3. Procédé selon la revendication 1 ou 2, **caractérisé en ce que** la valeur de profondeur d'affectation correspond à la valeur de profondeur décodée pour les pixels situés en dehors de la zone utile.

4. Procédé selon la revendication 3, dans lequel les données de profondeur de la sous-image codées dans le flux de données comprennent pour au moins un pixel de la sous-image, un résidu déterminé par une différence entre la valeur de profondeur dudit pixel et ladite valeur de profondeur d'affectation.

5. Procédé selon la revendication 4, comprenant le décodage dans le flux de données, d'un indicateur pour ladite au moins une sous-image indiquant si les données de profondeur sont codées par un résidu déterminé par une différence entre la valeur de profondeur dudit pixel et ladite valeur de profondeur d'affectation.

6. Procédé selon l'une quelconque des revendications 1 à 5, selon lequel ladite carte construite pour la sous-image est une carte de profondeur, dans laquelle une valeur infinie est affectée aux pixels situés en dehors de la zone utile.

7. Procédé selon l'une quelconque des revendications 1 à 5, selon lequel ladite carte construite pour la sous-image est une carte binaire.

8. Procédé selon la revendication 1, comprenant en outre la transmission de ladite carte binaire décodée audit module de synthèse lorsque l'indicateur indique que la sous-image est codée selon la première méthode.

9. Procédé selon la revendication 1, comprenant en outre:
- la détermination de la zone utile de la sous-image à partir de la carte binaire décodée lorsque l'indicateur indique que la sous-image est codée selon la première méthode,
- la construction d'une carte de profondeur pour la sous-image, dans laquelle une valeur infinie est affectée aux pixels situés en dehors de la zone utile,
- la transmission de ladite carte de profondeur à un module de synthèse.

10. Procédé selon l'une quelconque des revendications 1 à 9, dans lequel ladite au moins une vue de base de la vidéo multi-vues, correspond à une vue déterminée au codage à partir d'au moins une vue source.

11. Procédé selon l'une quelconque des revendications 1 à 10, comprenant en outre la réception des données de texture et des données de profondeur de ladite sous-image, ladite sous-image étant issue d'une vue intermédiaire synthétisée pour une position et une direction de visualisation d'un observateur dans un volume de visualisation.

12. Procédé selon la revendication 1 ou 2, comprenant en outre, lorsque l'indicateur indique que la sous-image est codée selon la deuxième méthode :
le décodage à partir dudit au moins un flux de données, d'une information représentative d'une valeur de texture d'affectation des données de texture de la sous-image, et
le décodage des données de texture de la sous-image à partir de ladite valeur de texture d'affectation.

13. Dispositif de décodage d'au moins un flux de données représentatif d'une vidéo multi-vues, ledit au moins flux de données comprenant au moins des données codées représentatives d'au moins une vue, dite de base, de la vidéo multi-vues et d'au moins une sous-image, les données codées de la au moins une vue de base comprenant des données de texture et des données de profondeur associées auxdites données de texture, ladite au moins une sous-image comprenant une zone, dite utile, et une zone dite non utile, ladite zone utile correspondant à une zone extraite d'une vue de la vidéo multi-vues non codée dans le flux de données, dite vue intermédiaire, les données codées de la au moins une sous-image comprenant des données de texture et des données de profondeur associées auxdites données de texture, la zone utile étant destinée à être utilisée pour générer au moins une image de ladite vue intermédiaire ou d'au moins une autre vue, le dispositif de décodage étant configuré pour:
- décoder, à partir dudit au moins un flux de données, un indicateur indiquant si la sous-image est codée selon une première méthode ou selon une deuxième méthode,
- lorsque l'indicateur indique que la sous-image est codée selon la première méthode :
décoder pour la sous-image une carte binaire indiquant, pour au moins un pixel de la sous-image, si ledit pixel appartient à la zone utile ou non, et,
si ledit pixel appartient à la zone utile, décoder pour la sous-image les données de texture et les données de profondeur associées auxdites données de texture,
- lorsque l'indicateur indique que la sous-image est codée selon la deuxième méthode :
décoder, à partir dudit au moins un flux de données, une information représentative d'une valeur de profondeur d'affectation des données de profondeur de la sous-image,
décoder des données de profondeur de la sous-image à partir de ladite valeur de profondeur d'affectation,
construire une carte indiquant, pour au moins un pixel de la sous-image, si le pixel appartient ou non à la zone utile, à partir des données de profondeur décodées et de l'information représentative de la valeur de profondeur d'affectation décodée.

14. Procédé de codage d'un flux de données représentatif d'une vidéo multi-vues, comprenant le codage d'au moins une vue, dite de base, de la vidéo multi-vues et d'au moins une sous-image, ledit flux de données comprenant des données codées de la au moins une vue de base et des données codées de la au moins une sous-image, les données codées de la au moins une vue de base comprenant des données de texture et des données de profondeur associées auxdites données de texture, ladite au moins une sous-image comprenant une zone, dite utile, et une zone dite non utile, ladite zone utile correspondant à une zone extraite d'une vue de la vidéo multi-vues non codée dans le flux de données, dite vue intermédiaire, les données codées de la au moins une sous-image comprenant des données de texture et des données de profondeur associées auxdites données de texture, la zone utile étant destinée à être utilisée pour générer au moins une image de ladite vue intermédiaire ou d'au moins une autre vue, le codage de ladite au moins une sous-image comprend:
- la détermination d'une méthode de codage pour coder la sous-image parmi une première méthode et une deuxième méthode,
- le codage d'un indicateur indiquant si la sous-image est codée selon la première méthode ou selon la deuxième méthode,
- lorsque l'indicateur indique que la sous-image est codée selon la première méthode :
le codage pour la sous-image d'une carte binaire indiquant, pour au moins un pixel de la sous-image, si ledit pixel appartient à la zone utile ou non, et,
si ledit pixel appartient à la zone utile, le codage des données de texture et des données de profondeur associées auxdites données de texture,
- lorsque l'indicateur indique que la sous-image est codée selon la deuxième méthode :
le codage des données de texture de la sous-image,
le codage, dans ledit flux de données, d'une information représentative d'une valeur de profondeur d'affectation des données de profondeur de la sous-image, et
le codage des données de profondeur à partir de ladite valeur de profondeur d'affectation.

15. Flux de données représentatif d'une vidéo multi-vues, comprenant au moins des données codées représentatives d'au moins une vue, dite de base, de la vidéo multi-vues et d'au moins une sous-image, les données codées de la au moins une vue de base comprenant des données de texture et des données de profondeur associées auxdites données de texture, ladite au moins une sous-image comprenant une zone, dite utile, et une zone dite non utile, ladite zone utile correspondant à une zone extraite d'une vue de la vidéo multi-vues non codée dans le flux de données, dite vue intermédiaire, les données codées de la au moins une sous-image comprenant des données de texture et des données de profondeur associées auxdites données de texture, la zone utile étant destinée à être utilisée pour générer au moins une image de ladite vue intermédiaire ou d'au moins une autre vue, le flux de données comprenant:
- un indicateur indiquant si la sous-image est codée selon une première méthode ou selon une deuxième méthode,
- lorsque l'indicateur indique que la sous-image est codée selon la première méthode : des données codées représentatives d'une carte binaire indiquant pour au moins un pixel de la sous-image si ledit pixel appartient à la zone utile ou non, et,
si ledit pixel appartient à la zone utile, les données codées de texture et les données codées de profondeur associées auxdites données de texture,
- lorsque l'indicateur indique que la sous-image est codée selon la deuxième méthode, les données de texture de la sous-image codées,
une information codée représentative de la valeur de profondeur d'affectation des données de profondeur de la sous-image, et
les données de profondeur de la sous-image codées à partir de ladite valeur de profondeur d'affectation.
